# FASCICULE DE BREVET EUROPEEN

(11) **EP 2 918 451 B1**
(45) Date de publication et mention de la délivrance du brevet: **14.09.2016**
(21) Numéro de dépôt: 15154571.2
(22) Date de dépôt: 10.02.2015
(51) Int. Cl.: B60R 13/08, B60K 13/04

(54) **Véhicule automobile à écran thermique pour la protection de son habitacle**
Kraftfahrzeug mit Hitzeschild zum Schutz des Innenraums
Motor vehicle with a heat shield for protecting the passenger compartment thereof

(30) Priorité: 13.03.2014 FR 1452100
(43) Date de publication de la demande: 16.09.2015
(73) Titulaire: PEUGEOT CITROËN AUTOMOBILES SA, 78140 Vélizy-Villacoublay (FR)
(72) Inventeur: Tallet, Frédéric, 70200 Moffans et Vacheresse (FR); Saillard, David, 39100 Dole (FR)

(56) Documents cités:
- US-A- 5 958 603
- US-A1- 2012 034 431
- US-B1- 6 955 845
- DEMMLER A: "HEAT SHEILD PROTECTS HUMMER", AUTOMOTIVE ENGINEERING, SOCIETY OF AUTOMOTIVE ENGINEERS. WARRENDALE, US, vol. 105, no. 11, 1 novembre 1997 (1997-11-01), page 60, XP000725705, ISSN: 0098-2571

## Description

La présente invention concerne un véhicule automobile à écran thermique pour la protection de son habitacle de la chaleur émanant du groupe moto-propulseur du véhicule.

L'invention concerne également un dispositif de protection thermique pour un tel véhicule et un procédé de pose d'un tel dispositif sous la caisse d'un véhicule automobile.

Dans la construction automobile, des efforts importants doivent être faits pour assurer un maximum de confort aux utilisateurs des véhicules automobiles. Ces efforts concernent par exemple l'isolation phonique de l'habitacle des véhicules par rapport à diverses sources de bruits inhérents au fonctionnement du moteur et à des bruits venant de l'extérieur des véhicules ou liés par exemple à l'état de la route sur laquelle un véhicule circule. Mais ces efforts concernent aussi la protection de l'habitacle de la chaleur développée par le moteur pendant son fonctionnement et même pendant un certain temps après l'arrêt du moteur. Pour assurer la protection de l'habitacle des véhicules automobiles contre ces nuisances, la caisse des véhicules est garnie, souvent aussi bien à l'extérieur qu'à l'intérieur de la caisse, de tapis isolants ou d'enduits isolants. Toutefois, ces tapis ou enduits ne supportent pas, ou pas longtemps, la chaleur émise par le groupe moto-propulseur, y compris par le dispositif d'échappement.

Un véhicule automobile selon le préambule de la revendication 1 est connu du document US-A-5 958 603.

L'un des buts de l'invention est de remédier à cet inconvénient sans gêner, voire rendre impossible, la disposition de conduits, par exemple du circuit hydraulique de freinage, ni d'autres éléments nécessaires au fonctionnement et à la commande des véhicules.

Le but de l'invention est atteint avec un véhicule automobile comportant un tablier de séparation de compartiment moteur relativement à l'avant d'un habitacle du véhicule, un plancher à l'arrière du tablier, en bas de l'habitacle, et un dispositif pour la protection thermique de l'habitacle, le dispositif de protection thermique comprenant des moyens de protection thermique disposés d'une part en dessous du plancher du véhicule et d'autre part, du côté compartiment moteur, sous le tablier, caractérisé en ce que les moyens de protection thermique comprennent un écran thermique de tablier ayant un pan principal disposé le long du tablier et un écran thermique d'avant de plancher disposé en dessous de l'avant du plancher du véhicule, l'écran thermique de tablier présentant, en aval du pan principal et sous le bas du tablier au raccordement avec le plancher, un bord inférieur en deux parties par lequel il correspond par chevauchement avec l'écran thermique de plancher et dont une première partie amont parmi les deux parties est en amont de l'écran de plancher en étant conformée en déflecteur et dont une seconde partie aval parmi les deux parties prolonge la première partie en déterminant une zone de recouvrement avec l'écran thermique de plancher en s'étendant au-dessus de l'avant de l'écran thermique de plancher.

Selon le mode de réalisation choisi, le véhicule peut également avoir l'une au moins des caractéristiques supplémentaires suivantes :
- la première partie du bord inférieur de l'écran thermique de tablier présente la section transversale d'une gouttière qui s'étend jusqu'à un niveau inférieur par rapport à tout niveau de l'écran thermique de plancher ;
- la seconde partie du bord inférieur de l'écran thermique de tablier comprend une zone de soyage ;
- au moins la zone de soyage de l'écran thermique de tablier et le bord avant de l'écran thermique de plancher présentent une forme ondulée ;
- au moins la zone de soyage de l'écran thermique de tablier et le bord avant de l'écran thermique de plancher présentent une forme de « S » ;
- l'écran thermique de tablier comprend des découpes formant des passages pour des conduits ou autres éléments nécessaires au fonctionnement du véhicule.

Le but de l'invention est également atteint avec un procédé de mise en place d'un dispositif de protection thermique dans un véhicule tel que défini ci-avant, comprenant une étape de pose de l'écran thermique de tablier sous le tablier et une étape de pose de l'écran thermique de plancher sous l'avant du plancher, dans lequel la pose de l'écran thermique de plancher est effectuée postérieurement à la pose de l'écran thermique de tablier, l'avant de l'écran thermique de plancher étant en recouvrement au-dessous de la partie seconde partie aval de l'écran thermique de tablier.

Le but de l'invention est de plus atteint avec un dispositif de protection thermique pour un véhicule automobile tel que défini plus haut, en comportant un tablier de séparation de compartiment moteur relativement à l'avant d'un habitacle du véhicule et un plancher à l'arrière du tablier, en bas de l'habitacle, le dispositif de protection thermique comprenant des moyens de protection thermique conformés d'une part pour être en dessous d'un plancher du véhicule et d'autre part pour être sous le tablier et du côté compartiment moteur, les moyens de protection thermique comprenant un écran thermique de tablier ayant un pan principal conformé pour être disposé le long du tablier et un écran thermique d'avant de plancher conformé pour être disposé en dessous de l'avant du plancher du véhicule, l'écran thermique de tablier présentant, en aval du pan principal, un bord inférieur en deux parties par lequel il correspond par chevauchement avec l'écran thermique d'avant de plancher et dont une première partie amont parmi les deux parties est en amont de l'écran thermique d'avant de plancher en étant conformée en déflecteur et dont une seconde partie aval parmi les deux parties prolonge la première partie en déterminant une zone de recouvrement avec l'écran thermique d'avant de plancher en s'étendant le long de l'avant de l'écran thermique d'avant de plancher.

D'autres caractéristiques et avantages de la présente invention ressortiront de la description ci-après d'un mode de réalisation du dispositif de protection thermique et de la description de la mise en place de ce dispositif.

La description est faite en référence aux dessins dont :
- la figure 1 est une vue schématique en perspective de dessous de la partie avant de la caisse d'un véhicule automobile selon l'invention, avec un dispositif de protection thermique selon l'invention,
- la figure 2 représente schématiquement, en une vue en perspective et de façon isolée, la disposition des deux écrans thermiques formant le dispositif de protection thermique de l'invention, et
- la figure 3 représente, avec davantage de détails que la figure 2, la disposition des deux écrans thermiques formant le dispositif de protection thermique de l'invention.

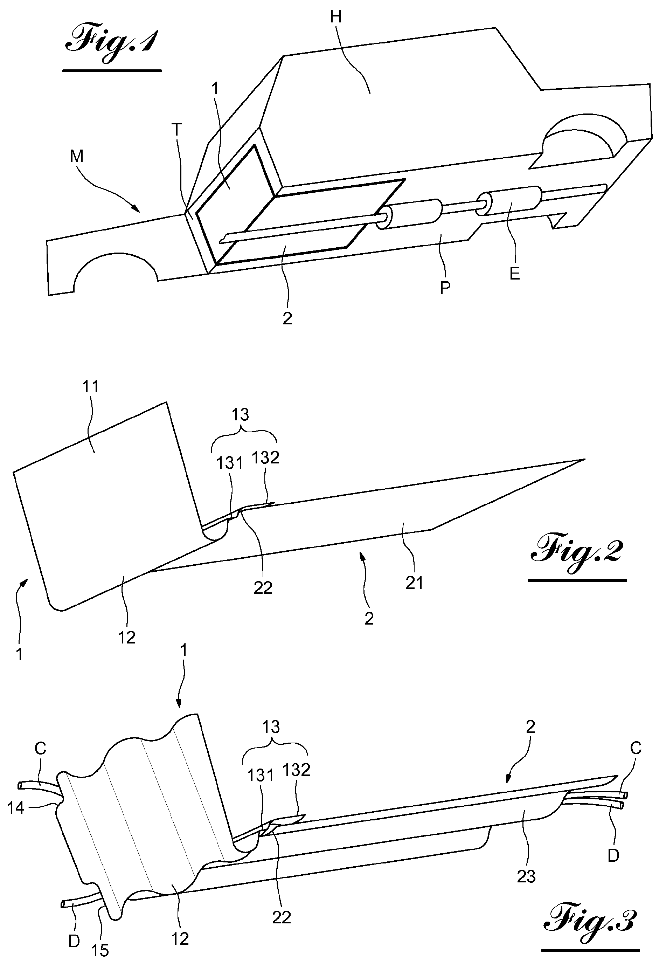

La figure 1 représente, de façon très schématique, en une vue en perspective, la disposition selon l'invention d'un dispositif de protection thermique de l'habitacle H d'un véhicule automobile, le dispositif de protection thermique étant monté sous la partie avant de la caisse du véhicule automobile. L'habitacle H est délimité par rapport à un compartiment M dans lequel est situé un groupe moto-propulseur, par un tablier T et vers la bas par un plancher P. Un ensemble d'échappement E est monté sous le plancher P. Dans la description qui va suivre, la direction désignée comme longitudinale correspond à l'axe d'avancement du véhicule qui sert ici de référentiel, et la notion d'amont à aval correspond respectivement à l'avant et à l'arrière du véhicule, dans le sens d'écoulement de l'air quand le véhicule est en mouvement.

Le dispositif de protection thermique comprend un écran thermique de tablier 1 protégeant l'habitacle H directement de la chaleur dégagée par le groupe moto-propulseur, et un écran thermique d'avant de plancher 2 protégeant l'habitacle H dans la partie avant du plancher P de l'air chaud sortant du compartiment M et passant en dessous du plancher.

La figure 2 montre, en une vue encore assez schématique, les dispositions de l'invention à l'aide de deux écrans thermiques 1, 2 représentés sous la forme de deux feuilles essentiellement planes.

L'écran thermique de tablier 1 comprend un pan principal 11 constitué par exemple par une feuille de tôle d'acier et qui est pourvu d'un bord inférieur en deux parties 12, 13 par lesquelles le bord inférieur de l'écran 1 est situé en correspondance, avec recouvrement, à l'écran thermique d'avant de plancher 2. Cet écran thermique 2 comporte un pan principal 21 constitué par exemple par une feuille de tôle d'acier et qui est pourvu d'un bord avant 22.

Parmi les deux parties du bord inférieur de l'écran thermique de tablier 1, une partie amont 12 du bord inférieur de l'écran 1 est formée sensiblement comme une gouttière et constitue un déflecteur qui protège la jonction entre les deux écrans thermiques des flux d'air venant du compartiment M. En même temps, la partie 12 forme un écran capable de supporter un passage avec projection d'eau.

La partie 12 comporte deux bords parallèles l'un à l'autre dont un bord est solidaire du pan principal 11 de l'écran 1 et dont l'autre bord est orienté sensiblement parallèlement au bord avant 22 de l'écran thermique de plancher avant 2. La partie 12 du bord inférieur de l'écran thermique 1 est suivie de la partie 13 qui constitue une zone de recouvrement avec l'écran thermique 2.

En effet, la seconde partie aval 13 prolonge la première partie 12 en déterminant une zone de recouvrement avec l'écran thermique d'avant de plancher 2 en s'étendant au-dessus de l'avant de cet écran thermique 2. La partie 13 comporte à cet effet une portion 131 constituant le décrochement caractéristique d'un soyage et qui est suivie de la zone 132 recouvrant l'écran thermique 2 sur la longueur de cette zone. La portion 131 et la zone 132 sont en marche d'escalier sur leur profil considéré longitudinalement pour être étagées avec des décalages de bas en haut et d'amont en aval.

Alors que l'écran thermique de tablier 1 est fixé au tablier T et alors que l'écran thermique d'avant de plancher 2 est fixé au plancher P, les deux écrans thermiques 1 et 2 sont assemblés sans être fixés l'un sur l'autre.

En effet, le dispositif de protection thermique de l'invention est conçu pour être monté au véhicule automobile en deux étapes bien distinctes et éloignées l'une de l'autre dans le temps. Car l'écran thermique de tablier 1 est monté avant le montage des éléments montés en automatique, tels le moteur, des conduits et des câbles, alors que l'écran thermique d'avant de plancher 2 est monté sur le plancher P bien après l'écran thermique de tablier 1, par exemple juste avant le montage de l'échappement E.

Lors du montage de l'écran thermique d'avant de plancher 2 sous le plancher P, le bord avant 22 de l'écran thermique 2 est engagé sur le soyage de l'écran thermique de tablier 1, plus précisément en-dessous du soyage, et poussé en direction de l'écran thermique 1 jusqu'à ce qu'il butte sur la naissance du soyage. Ensuite, l'écran thermique 2 est fixé au plancher dans cette position.

La figure 3 représente un mode de réalisation du dispositif de protection thermique selon l'invention. Comme ladite figure le montre, l'écran thermique de tablier 1 et l'écran thermique d'avant de plancher 2 forment une jonction par recouvrement du bord avant 22 de l'écran thermique 2 par la zone de soyage 132 de la seconde partie 13 du bord inférieur de l'écran thermique 1 sur la longueur de cette zone. En effet, comme déjà expliqué ci avant, le bord inférieur de l'écran thermique de tablier 1 comprend la partie amont 12 constituant le déflecteur et la partie aval 13 qui coopère avec le bord avant 22 de l'écran thermique 2 pour former la jonction entre les deux écrans. La partie 13 comporte à cet effet la portion amont 131 constituant le décrochement caractéristique d'un soyage et la zone aval 132 recouvrant l'écran thermique 2. La portion 131 et la zone 132 sont en marche d'escalier sur leur profil considéré longitudinalement pour être étagées avec des décalages de bas en haut et d'amont en aval.

La figure 3 montre également que les écrans thermiques 1 et 2 ont des pans principaux 11 et 21 ondulés. Ainsi, ils peuvent être considérés comme étant par exemple à profil en S en considérant une orientation transversale, selon la largeur du véhicule. Grâce à cette disposition de l'invention, chacun des deux écrans thermiques forme un ou plusieurs tunnels orientés dans le sens de la direction d'avancement du véhicule automobile, comme par exemple le tunnel 23 de l'écran thermique 2. Alors que le tunnel 23 et d'autres tunnels facilitent le passage de conduits hydrauliques C et d'autres éléments D nécessaires au fonctionnement et à la commande du véhicule, en dessous du plancher P et le long le tablier T, l'ensemble des ondulations constitue un guidage aérodynamique canalisant et lissant les flux d'air passant le long du tablier et le long du plancher avant du véhicule.

## Revendications

1. Véhicule automobile comportant un tablier (T) de séparation de compartiment moteur (M) relativement à l'avant d'un habitacle (H) du véhicule, un plancher (P) à l'arrière du tablier (T), en bas de l'habitacle, et un dispositif pour la protection thermique de l'habitacle, le dispositif de protection thermique comprenant des moyens de protection thermique disposés d'une part en dessous du plancher (P) du véhicule et d'autre part, du côté compartiment moteur, sous le tablier (T),
**caractérisé en ce que** les moyens de protection thermique comprennent un écran thermique de tablier (1) ayant un pan principal (11) disposé le long du tablier (T) et un écran thermique d'avant de plancher (2) disposé en dessous de l'avant du plancher (P) du véhicule, l'écran thermique de tablier (1) présentant, en aval du pan principal et sous le bas du tablier au raccordement avec le plancher, un bord inférieur en deux parties (12, 13) par lequel il correspond par chevauchement avec l'écran thermique d'avant de plancher (2) et dont une première partie amont parmi les deux parties (12) est en amont de l'écran de plancher en étant conformée en déflecteur et dont une seconde partie aval (13) parmi les deux parties prolonge la première partie (12) en déterminant une zone de recouvrement (132) avec l'écran thermique d'avant de plancher (2) en s'étendant au-dessus de l'avant de cet écran thermique (2).

2. Véhicule selon la revendication 1, **caractérisé en ce que** la première partie (12) du bord inférieur de l'écran thermique de tablier (1) présente la section transversale d'une gouttière qui s'étend jusqu'à un niveau inférieur par rapport à tout niveau de l'écran thermique de plancher (2).

3. Véhicule selon la revendication 1 ou 2, **caractérisé en ce que** la seconde partie (13) du bord inférieur de l'écran thermique de tablier (1) comprend une zone de soyage (132).

4. Véhicule selon la revendication 3, **caractérisé en ce qu'**au moins la zone de soyage (132) de l'écran thermique de tablier (1) et le bord avant (22) de l'écran thermique d'avant de plancher (2) présentent une forme ondulée.

5. Véhicule selon la revendication 3 ou 4, **caractérisé en ce qu'**au moins la zone de soyage (132) de l'écran thermique de tablier (1) et le bord avant (22) de l'écran thermique d'avant de plancher (2) présentent une forme de « S ».

6. Véhicule selon l'une quelconque des revendications 1 à 5, **caractérisé en ce que** l'écran thermique de tablier (1) comprend des découpes (14, 15) formant des passages pour des conduits (C) ou autres éléments (D) nécessaires au fonctionnement du véhicule.

7. Procédé de mise en place d'un dispositif de protection thermique dans un véhicule selon l'une quelconque des revendications 1 à 6, comprenant une étape de pose de l'écran thermique de tablier (1) sous le tablier (T) et une étape de pose de l'écran thermique d'avant de plancher (2) sous l'avant du plancher (2), dans lequel la pose de l'écran thermique d'avant de plancher (2) est effectuée postérieurement à la pose de l'écran thermique de tablier (1), l'avant de l'écran thermique d'avant de plancher (2) étant en recouvrement au-dessous de la partie seconde partie aval (13) de l'écran thermique de tablier (1).

8. Dispositif de protection thermique pour un véhicule automobile conforme à l'une quelconque des revendications 1 à 6 en comportant un tablier (T) de séparation de compartiment moteur (M) relativement à l'avant d'un habitacle (H) du véhicule et un plancher à l'arrière du tablier (T), en bas de l'habitacle, le dispositif de protection thermique comprenant des moyens de protection thermique conformés d'une part pour être en dessous d'un plancher (P) du véhicule et d'autre part pour être sous le tablier (T) et du côté compartiment moteur, les moyens de protection thermique comprenant un écran thermique de tablier (1) ayant un pan principal (11) conformé pour être disposé le long du tablier (T) et un écran thermique d'avant de plancher (2) conformé pour être disposé en dessous de l'avant du plancher (P) du véhicule, l'écran thermique de tablier (1) présentant, en aval du pan principal, un bord inférieur en deux parties (12, 13) par lequel il correspond par chevauchement avec l'écran thermique d'avant de plancher (2) et dont une première partie amont parmi les deux parties (12) est en amont de l'écran thermique d'avant de plancher (2) en étant conformée en déflecteur et dont une seconde partie aval (13) parmi les deux parties prolonge la première partie (12) en déterminant une zone de recouvrement (132) avec l'écran thermique d'avant de plancher (2) en s'étendant le long de l'avant de cet écran thermique (2).

## Patentansprüche

1. Kraftfahrzeug, eine Spritzwand (T) zum Trennen eines Motorraumes (M) vom vorderen Teil eines Fahrgastraums (H) des Fahrzeugs, ein Bodenblech (P) hinter der Spritzwand (T) unten im Fahrgastraum und eine Vorrichtung für den Hitzeschutz des Fahrgastraums umfassend, wobei die Vorrichtung für den Hitzeschutz Mittel für den Hitzeschutz umfasst, die einerseits unter dem Bodenblech (P) des Fahrzeugs, und andererseits auf der Seite des Motorraumes unter der Spritzwand (T) angeordnet sind,
**dadurch gekennzeichnet, dass** die Mittel für den Hitzeschutz eine thermische Abschirmung für die Spritzwand (1) umfassen, die eine Hauptseite (11) aufweist, die entlang der Spritzwand (T) angeordnet ist, sowie eine thermische Abschirmung für das vordere Bodenblech (2), die unter dem vorderen Bodenblech (P) des Fahrzeugs angeordnet ist, wobei die thermische Abschirmung für die Spritzwand (1) unterhalb der Hauptseite, und unter dem unteren Abschnitt der Spritzwand, an der Schnittstelle mit dem Bodenblech eine Unterkante in zwei Abschnitten (12, 13) aufweist, über die sie durch eine Überschneidung mit der thermischen Abschirmung für das vordere Bodenblech (2) verbunden ist, und von dem ein erster, vorderer Abschnitt der beiden Abschnitte (12) vor der Bodenabschirmung liegt, und als Abweiser ausgeformt ist, und von dem ein zweiter, hinterer Abschnitt (13) der beiden Abschnitte den ersten Abschnitt (12) fortsetzt, indem er eine Überlappungszone (132) mit der thermischen Abschirmung für das vordere Bodenblech (2) bestimmt, indem er oberhalb des Vorderteils dieser thermischen Abschirmung (2) verläuft.

2. Fahrzeug nach Anspruch 1, **dadurch gekennzeichnet, dass** der erste Abschnitt (12) der Unterkante der thermischen Abschirmung für die Spritzwand (1) den Querschnitt einer Rinne aufweist, die sich bis zu einem Niveau erstreckt, das im Verhältnis zu allen Niveaus der thermischen Abschirmung für das vordere Bodenblech (2) niedriger ist.

3. Fahrzeug nach Anspruch 1 oder 2, **dadurch gekennzeichnet, dass** der zweite Abschnitt (13) der Unterkante der thermischen Abschirmung für die Spritzwand (1) eine abgesetzte Überlappungszone (132) umfasst.

4. Fahrzeug nach Anspruch 3, **dadurch gekennzeichnet, dass** zumindest die abgesetzte Überlappungszone (132) der thermischen Abschirmung für die Spritzwand (1) und die Vorderkante (22) der thermischen Abschirmung für das vordere Bodenblech (2) eine gewellte Form aufweisen.

5. Fahrzeug nach Anspruch 3 oder 4, **dadurch gekennzeichnet, dass** zumindest die abgesetzte Überlappungszone (132) der thermischen Abschirmung für die Spritzwand (1) und die Vorderkante (22) der thermischen Abschirmung für das vordere Bodenblech (2) eine "S"-Form aufweisen.

6. Fahrzeug nach irgendeinem der Ansprüche 1 bis 5, **dadurch gekennzeichnet, dass** die thermische Abschirmung für die Spritzwand (1) Ausschnitte (14, 15) umfasst, die Durchlässe für die Leitungen (C) oder andere Elemente bilden (D), die für den Betrieb des Fahrzeugs nötig sind.

7. Verfahren zum Anbringen einer Vorrichtung für den Hitzeschutz in einem Fahrzeug nach irgendeinem der Ansprüche 1 bis 6, einen Schritt zum Einsetzen der thermischen Abschirmung für die Spritzwand (1) unter die Spritzwand (T) und einen Schritt zum Einsetzen der thermischen Abschirmung für das vordere Bodenblech (2) unter das vordere Bodenblech (2) umfasst, wobei das Einsetzen der thermischen Abschirmung für das vordere Bodenblech (2) nach dem Einsetzen der thermischen Abschirmung für die Spritzwand (1) erfolgt, wobei die Vorderseite der thermischen Abschirmung für das vordere Bodenblech (2) den zweiten Abschnitt des hinteren Abschnitts (13) der thermischen Abschirmung für die Spritzwand (1) oberhalb überlappt.

8. Vorrichtung für den Hitzeschutz für ein Kraftfahrzeug nach irgendeinem der Ansprüche 1 bis 6, eine Spritzwand (T) zum Trennen eines Motorraumes (M) vom vorderen Teil eines Fahrgastraums (H) des Fahrzeugs und ein Bodenblech hinter der Spritzwand (T) unten im Fahrgastraum umfassend, wobei die Vorrichtung für den Hitzeschutz Mittel für den Hitzeschutz umfasst, die einerseits ausgeformt sind, um unter einem Bodenblech (P) des Fahrzeugs zu sein, und andererseits, um unter der Spritzwand (T) und auf der Seite des Motorraumes zu sein, wobei die Mittel für den Hitzeschutz eine thermische Abschirmung für die Spritzwand (1) umfassen, die eine Hauptseite (11) aufweist, die ausgeformt ist, um entlang der Spritzwand (T) angeordnet zu werden, sowie eine thermische Abschirmung für das vordere Bodenblech (2), die ausgeformt ist, um unter dem vorderen Bodenblech (P) des Fahrzeugs angeordnet zu werden, wobei die thermische Abschirmung für die Spritzwand (1) unterhalb der Hauptseite eine Unterkante in zwei Abschnitten (12, 13) aufweist, über die sie durch eine Überschneidung mit der thermischen Abschirmung für das vordere Bodenblech (2) verbunden ist, und von dem ein erster, vorderer Abschnitt aus den beiden Abschnitten (12) vor der thermischen Abschirmung für das vordere Bodenblech (2) liegt, und als Abweiser ausgeformt ist, und von dem ein zweiter, hinterer Abschnitt (13) aus den beiden Abschnitten den ersten Abschnitt (12) fortsetzt, indem er eine Überlappungszone (132) mit der thermischen Abschirmung für das vordere Bodenblech (2) bestimmt, indem er oberhalb des Vorderteils dieser thermischen Abschirmung (2) verläuft.

## Claims

1. Motor vehicle comprising a bulkhead (T) separating the engine compartment (M) relative to the front of a cabin (H) of the vehicle, a floor (P) at the rear of the bulkhead (T), at the bottom of the cab, and a device for the thermal protection of the cab, with the thermal protection device comprising means for thermal protection arranged on the one hand below the floor (P) of the vehicle and on the other hand, on the engine compartment side, under the bulkhead (T),
**characterised in that** the means for thermal protection comprise a bulkhead heat shield (1) having a main panel (11) arranged along the bulkhead (T) and a floor front heat shield (2) arranged below the front of the floor (P) of the vehicle, with the bulkhead heat shield (1) having, downstream of the main panel and under the bottom of the bulkhead with the connection with the floor, a lower edge in two portions (12, 13) through which it corresponds via overlapping with the floor front heat shield (2) and of which a first upstream portion among the two portions (12) is upstream of the floor shield by being conformed as a deflector and of which a second downstream portion (13) among the two portions extends the first portion (12) by determining an overlap zone (132) with the floor front heat shield (2) by extending above the front of this heat shield (2).

2. Vehicle according to claim 1, **characterised in that** the first portion (12) of the lower edge of the bulkhead heat shield (1) has the cross-section of a gutter that extends to a lower level with respect to any level of the floor heat shield (2).

3. Vehicle according to claim 1 or 2, **characterised in that** the second portion (13) of the lower edge of the bulkhead heat shield (1) comprises a plunging zone (132).

4. Vehicle according to claim 3, **characterised in that** at least the plunging zone (132) of the bulkhead heat shield (1) and the front edge (22) of the floor front heat shield (2) have an undulated shape.

5. Vehicle according to claim 3 or 4, **characterised in that** at least the plunging zone (132) of the bulkhead heat shield (1) and the front edge (22) of the floor front heat shield (2) have an "S" shape.

6. Vehicle according to any of claims 1 to 5, **characterised in that** the bulkhead heat shield (1) comprises cut-outs (14, 15) forming passages for conduits (C) or other elements (D) required for the operation of the vehicle.

7. Method for the setting in place of a thermal protection device in a vehicle according to any of claims 1 to 6, comprising step of installing the bulkhead heat shield (1) under the bulkhead (T) and a step of installing the floor front heat shield (2) under the front of the floor (2), wherein the installing of the floor front heat shield (2) is carried out after the installing of the bulkhead heat shield (1), with the front of the floor front heat shield (2) being overlapping below the second downstream portion (13) of the bulkhead heat shield (1).

8. Thermal protection device for a motor vehicle in accordance with any of claims 1 to 6 by comprising a bulkhead (T) separating the engine compartment (M) relative to the front of a cabin (H) of the vehicle and a floor at the rear of the bulkhead (T), at the bottom of the cab, with the thermal protection device comprising means for thermal protection conformed on the one hand to be below a floor (P) of the vehicle and on the other hand to be under the bulkhead (T) and on the engine compartment side, with the means for thermal protection comprising a bulkhead heat shield (1) having a main panel (11) conformed to be arranged along the bulkhead (T) and a floor front heat shield (2) conformed to be arranged below the front of the floor (P) of the vehicle, the bulkhead heat shield (1) having, downstream of the main panel, a lower edge in two portions (12, 13) through which it corresponds by overlapping with the floor front heat shield (2) and of which a first upstream portion among the two portions (12) is upstream of the floor front heat shield (2) by being conformed as a deflector and of which a second downstream portion (13) among the two portions extends the first portion (12) by determining an overlap zone (132) with the floor front heat shield (2) by extending along the front of this heat shield (2).
